# EUROPÄISCHE PATENTSCHRIFT

(11) **EP 4 288 314 B1**
(45) Veröffentlichungstag und Bekanntmachung des Hinweises auf die Patenterteilung: **02.04.2025**
(21) Anmeldenummer: 22701609.4
(22) Anmeldetag: 24.01.2022
(51) Int. Cl.: B60W 30/14, B60W 30/18, B60W 10/04, B60W 10/184, B60W 30/09, B60W 30/095

(54) **VERFAHREN UND SYSTEM ZUR LÄNGSSTEUERUNG EINES KRAFTFAHRZEUGS**
METHOD AND SYSTEM FOR A LONGITUDINAL CONTROL OF A MOTOR VEHICLE
PROCÉDÉ ET SYSTÈME DE COMMANDE LONGITUDINALE D'UN VÉHICULE AUTOMOBILE

(30) Priorität: 03.02.2021 DE 102021200998
(43) Veröffentlichungstag der Anmeldung: 13.12.2023
(73) Patentinhaber: VOLKSWAGEN AKTIENGESELLSCHAFT, 38440 Wolfsburg (DE)
(72) Erfinder: SCHMIDT, Bastian, 38440 Wolfsburg (DE); GOHLKE, Daniel, 38553 Wasbüttel (DE)
(86) Internationale Anmeldenummer: PCT/EP2022/051521
(87) Internationale Veröffentlichungsnummer: WO 2022/167248

(56) Entgegenhaltungen:
- EP-A1- 3 418 150
- DE-A1- 102013 100 206
- DE-A1- 102017 106 616
- DE-T5- 112009 005 400

## Beschreibung

Die vorliegende Erfindung betrifft ein Verfahren zur wenigstens teilweise automatischen Längssteuerung eines Kraftfahrzeugs, wobei mittels eines Umfeldsensorsystems des Kraftfahrzeugs Sensordaten erzeugt werden, welche eine Umgebung des Kraftfahrzeugs darstellen und mittels einer Recheneinheit des Kraftfahrzeugs basierend auf den Sensordaten ein Geschwindigkeitsvektor eines Verkehrsteilnehmers in der Umgebung bestimmt wird und eine potentiellen Kollision des Verkehrsteilnehmers mit dem Kraftfahrzeug prädiziert wird. Die Erfindung betrifft ferner ein entsprechendes Fahrzeugsteuerungssystem sowie ein Kraftfahrzeug mit einem solchen Fahrzeugsteuerungssystem.

Automatische Notbremssysteme für Kraftfahrzeugs sind bekannt. Diese verfolgen die Eingriffsstrategie, so spät wie möglich zu intervenieren, um nicht unnötige Eingriffe zu veranlassen, solange der Fahrer gegebenenfalls selbst durch ein dynamisches Manöver die Situation deeskalieren könnte. Dementsprechend wird das Fahrzeug bei einer solchen Notbremsung mit sehr großer Verzögerung abgebremst.

Ein solch kurzfristiges und starkes Abbremsen, unter Umständen bis zum Stillstand des Kraftfahrzeugs, ist jedoch in vielen Fällen für die Passagiere unangenehm, da dies mit entsprechend hohen Kräften einhergeht, die auf die Passagiere wirken, und das Kraftfahrzeug nach der Notbremsung wieder beschleunigen muss, um die gewünschte Reisegeschwindigkeit zu erreichen.

Im Dokument DE 10 20 11 109 697 A1 wird ein Verfahren zum Betreiben eines Kraftfahrzeugs angegeben, bei dem ermittelt wird, ob während der Fahrt ein Abbiegevorgang eingeleitet wird und dabei eine Gefahr einer Kollision mit einem entgegenkommenden Verkehrsteilnehmer besteht. Ist dies der Fall, so wird ein automatischer Bremseingriff ausgelöst, der jedoch abgebrochen wird, sobald beispielsweise eine Fahrgeschwindigkeit des Kraftfahrzeugs um eine vorgegebene Geschwindigkeitsdifferenz reduziert wurde.

Dokument DE 10 2017 106616 A1 beschreibt ein Verfahren zum Steuern eines Fahrzeugs zum Vermeiden eines Zusammenstoßes. Eine Aufnahmevorrichtung erfasst ein Objekt in der Nähe des Fahrzeugs und ein Sensor erhält Positions- und Geschwindigkeitsinformationen des Objekts. Eine Steuerungsvorrichtung ist dazu eingerichtet, variabel einen Ziel-Erfassungsbereich basierend auf der Art des erfassten Objekts zu ermitteln, eine Zeitdauer bis zum Zusammenstoß basierend auf den Positions- und Geschwindigkeitsinformationen des Objekts zu berechnen und ein Signal auszugeben, um eine Fahrgeschwindigkeit des Fahrzeugs basierend auf der berechneten TTC zu steuern. Eine Geschwindigkeitsregulierungsvorrichtung ist eingerichtet ist, die Fahrgeschwindigkeit des Fahrzeugs in Antwort auf das ausgegebene Steuerungssignal zu regulieren. Die Steuerungsvorrichtung kann z.B. den Ziel-Erfassungsbereich basierend auf zumindest einer von einer Transversal- und einer Longitudinalbewegungsgeschwindigkeit basierend auf der Art des erfassten Objekts ermitteln. Dabei entspricht die Longitudinalbewegungsgeschwindigkeit im Wesentlichen einer Geschwindigkeit in der Fahrrichtung des Fahrzeugs und die Transversalbewegungsgeschwindigkeit im Wesentlichen einer Geschwindigkeit quer dazu.

Dokument DE 10 2013 100206 A1 beschreibt ein Verfahren zum Vermeiden einer Kollision zwischen einem Trägerfahrzeug und einem Zielfahrzeug, wobei gegenwärtige Positionen des Trägerfahrzeugs und des Zielfahrzeugs geortet werden und eine potentielle Kollisionszone durch Vorwärtsprojizieren ihrer der Bewegungsbahnen und Identifizieren der Kreuzung der Bewegungsbahnen definiert wird. Es wird geprüft, ob das Zielfahrzeug den Weg des Fahrzeugs kreuzt und die Position des Trägerfahrzeugs zu dem Zeitpunkt wird berechnet, zu dem erwartet wird, dass das Zielfahrzeug die potentielle Kollisionszone erreicht. Dann wird auf der Grundlage der angepassten angenommenen Fahrzeuglängen ein Geschwindigkeitsänderungswert berechnet, der für das Trägerfahrzeug erforderlich ist, um eine Kollision mit dem Zielfahrzeug zu vermeiden.

Vor diesem Hintergrund ist es eine Aufgabe der vorliegenden Erfindung, ein verbessertes Konzept zur wenigstens teilweise automatischen Längssteuerung eines Kraftfahrzeugs anzugeben, durch das eine Stärke eines Eingriffs in die Längssteuerung reduziert wird, insbesondere beim geradeaus fahren des Kraftfahrzeugs, beispielsweise an einer Kreuzung.

Diese Aufgabe wird vorliegend gelöst durch den jeweiligen Gegenstand der unabhängigen Ansprüche. Vorteilhafte Weiterbildungen und bevorzugte Ausführungsformen sind Gegenstand der abhängigen Ansprüche.

Das verbesserte Konzept beruht auf der Idee, zunächst festzustellen, dass sich ein anderer Verkehrsteilnehmer im Wesentlichen quer zu dem Kraftfahrzeug bewegt und so dann eine Zielgeschwindigkeit für das Kraftfahrzeug zu berechnen, um eine Kollision mit dem Verkehrsteilnehmer zu vermeiden.

Gemäß dem verbesserten Konzept wird ein Verfahren zur wenigstens teilweise automatischen Längssteuerung eines Kraftfahrzeugs, insbesondere beim Geradeausfahren des Kraftfahrzeugs, beispielsweise bei oder vor dem geraden Überqueren einer Kreuzung, angegeben. Mittels eines Umfeldsensorsystems des Kraftfahrzeugs werden Sensordaten erzeugt, welche eine Umgebung des Kraftfahrzeugs darstellen. Mittels einer Recheneinheit des Kraftfahrzeugs wird basierend auf den Sensordaten ein Geschwindigkeitsvektor eines Verkehrsteilnehmers in der Umgebung bestimmt und mittels der Recheneinheit wird basierend auf den Sensordaten eine potentielle Kollision des Verkehrsteilnehmers mit dem Kraftfahrzeug prädiziert. Mittels der Recheneinheit wird basierend auf den Geschwindigkeitsvektor festgestellt, dass sich der Verkehrsteilnehmer im Wesentlichen quer zu einer Bewegungsrichtung des Kraftfahrzeugs bewegt und eine Zielgeschwindigkeit für das Kraftfahrzeug berechnet, um eine prädizierte Kollision zu vermeiden. Eine Geschwindigkeit des Kraftfahrzeugs wird automatisch auf die Zielgeschwindigkeit reduziert.

Unter der Längssteuerung des Kraftfahrzeugs kann im Allgemeinen eine Beschleunigung oder Verzögerung des Kraftfahrzeugs, insbesondere durch entsprechende Ansteuerung eines Antriebsmotors oder eines Bremssystems des Kraftfahrzeugs, verstanden werden. Das Verfahren nach dem verbesserten Konzept ist auf die Längssteuerung gerichtet. Dies schließt es jedoch nicht notwendigerweise aus, dass auch eine Quersteuerung des Kraftfahrzeugs beispielsweise ein Ausweichmanöver oder dergleichen, durchgeführt wird.

Das Kraftahrzeug kann beispielsweise ein Fahrzeugsteuerungssystem zur wenigstens teilweise automatischen Längssteuerung des Kraftfahrzeugs aufweisen. Das Fahrzeugsteuerungssystem kann dabei insbesondere die Recheneinheit und/oder das Umfeldsensorsystem und/oder gegebenenfalls weitere Steuergeräte beziehungsweise Aktuatoren des Kraftfahrzeugs beinhalten.

Das Fahrzeugsteuerungssystem kann dabei ein elektronisches System darstellen, das dazu eingerichtet ist, das Kraftfahrzeug vollautomatisch oder vollautonom zu führen und zu steuern, insbesondere ohne, dass ein Eingriff in eine Steuerung durch einen Fahrer erforderlich ist. Das Kraftfahrzeug beziehungsweise das Fahrzeugsteuerungssystem führt dabei alle erforderlichen Funktionen, wie gegebenenfalls erforderliche Lenk-, Brems- und/oder Beschleunigungsmanöver, die Beobachtung und Erfassung des Straßenverkehrs sowie die damit verbundenen erforderlichen Reaktionen selbsttätig und vollautomatisch durch. Insbesondere kann das Fahrzeugsteuerungssystem dann zur Implementierung eines vollautomatischen oder vollautonomen Fahrmodus des Kraftfahrzeugs nach Stufe 5 der Klassifizierung gemäß SAE J3016 dienen. Das Fahrzeugsteuerungssystem kann aber auch als Fahrerassistenzsystem (Englisch: "advanced driver assistance system", ADAS) ausgebildet sein, welches den Fahrer bei einer teilweise automatisierten oder teilautonomen Fahrt des Kraftfahrzeugs unterstützt. Das Fahrzeugsteuerungssystem kann insbesondere als Sicherheitssystem ausgestaltet sein, das beispielsweise unabhängig von einer vorherigen Aktivierung durch den Fahrer aktiviert sein kann. Insbesondere kann das Fahrzeugsteuerungssystem zur Implementierung eines teilweise automatisierten oder teilautonomen Fahrmodus des Kraftfahrzeugs nach einer Stufen 1 bis 4 gemäß der SAE J3016 Klassifizierung dienen. Beispielsweise kann die Funktionalität des Fahrzeugsteuerungssystems dabei auf die Längssteuerung des Kraftfahrzeugs oder auf die Durchführung eines Verfahrens nach dem verbesserten Konzept beschränkt sein. Dies ist jedoch nicht notwendigerweise der Fall. Hier und im Folgenden bezieht sich "SAE J3016" auf die entsprechende Norm in der Version vom Juni 2018.

Unter einem Umfeldsensorsystem kann hier und im Folgenden ein Sensorsystem verstanden werden, das dazu in der Lage ist, Sensordaten oder Sensorsignale zu erzeugen, welche die Umgebung des Kraftfahrzeugs beziehungsweise des Umfeldsensorsystems abbilden, darstellen oder widergeben. Insbesondere ist die Fähigkeit, elektromagnetische oder sonstige Signale aus der Umgebung zu erfassen, nicht hinreichend, um ein Sensorsystem als Umfeldsensorsystem zu erachten. Beispielsweise können Kameras, Radarsysteme, Lidarsysteme oder Ultraschallsensorsysteme als Umfeldsensorsysteme aufgefasst werden. In einem Verfahren nach dem verbesserten Konzept kann das Umfeldsensorsystem vorteilhafterweise zum Beispiel eine oder mehrere Kameras, eines oder mehrere Radarsysteme und/oder eines oder mehrere Lidarsysteme beinhalten.

Der Geschwindigkeitsvektor des Verkehrsteilnehmers entspricht einer Bewegungsrichtung des Verkehrsteilnehmers. Dementsprechend kann auch die Bewegungsrichtung des Kraftfahrzeugs als Geschwindigkeitsvektor des Kraftfahrzeugs verstanden und dargestellt werden. Die Geschwindigkeitsvektoren des Verkehrsteilnehmers beziehungsweise des Kraftfahrzeugs können dabei insbesondere in einem gemeinsamen ortsfesten Fahrbahnkoordinatensystem betrachtet werden, in dem eine Fahrbahn, auf der sich das Kraftfahrzeug sowie der Verkehrsteilnehmer bewegen, ruht. In diesem Sinne ist die Bewegung des Verkehrsteilnehmers im Wesentlichen quer zur Bewegungsrichtung des Kraftfahrzeugs zu verstehen. Die eigentlichen Berechnungen können jedoch selbstverständlich in einem beliebigen Koordinatensystem durchgeführt werden.

Dass sich der Verkehrsteilnehmer im Wesentlichen quer zur Bewegungsrichtung des Kraftfahrzeugs bewegt kann insbesondere derart verstanden werden, dass eine Querbewegung senkrecht zur Bewegungsrichtung des Kraftfahrzeugs stärker ausgeprägt ist als eine Bewegungskomponente parallel zur Bewegungsrichtung des Kraftfahrzeugs, beispielsweise in dem Fahrbahnkoordinatensystem betrachtet.

Mit anderen Worten kann die Recheneinheit beispielsweise feststellen, dass eine Komponente des Geschwindigkeitsvektors des Verkehrsteilnehmers parallel zu der Bewegungsrichtung kleiner ist als eine Komponente des Geschwindigkeitsvektors senkrecht zu der Bewegungsrichtung, um festzustellen, dass sich der Verkehrsteilnehmer im Wesentlichen quer zu einer Bewegungsrichtung des Kraftfahrzeugs bewegt.

Dabei kann die Recheneinheit insbesondere entsprechende Beträge der Komponenten des Geschwindigkeitsvektors miteinander vergleichen. Auch hier kann beispielsweise wieder von einem Vergleich im Fahrbahnkoordinatensystem ausgegangen werden.

Anhand des Geschwindigkeitsvektors des Verkehrsteilnehmers kann die Recheneinheit beispielsweise auch feststellen, dass sich der Verkehrsteilnehmer auf das Kraftfahrzeug zubewegt und nicht von dem Kraftfahrzeug wegbewegt. Anderenfalls wäre auch keine entsprechende Kollision zu prädizieren. Die Recheneinheit kann beispielsweise basierend auf den Sensordaten neben dem Geschwindigkeitsvektor des Verkehrsteilnehmers eine Position des Verkehrsteilnehmers, insbesondere relativ zu dem Kraftfahrzeug, bestimmen. Außerdem kann die Recheneinheit dazu gegebenenfalls digitale Karteninformationen des Kraftfahrzeugs oder Informationen eines Empfängers für ein globales Navigationssatelliten-system GNSS, heranziehen. Basierend auf den Geschwindigkeitsvektoren des Verkehrsteilnehmers und des Kraftfahrzeugs sowie der Relativposition des Verkehrsteilnehmers zu dem Kraftfahrzeug kann die Recheneinheit, insbesondere unter der Annahme einer Geradeausfahrt des Kraftfahrzeugs und gegebenenfalls auch des Verkehrsteilnehmer, einen entsprechenden Ort und/oder eine Zeit der potentiellen Kollision vorhersagen, um die Kollision zu prädizieren. Optional kann die Recheneinheit darüber hinaus basierend auf den Sensordaten oder basierend auf einer V2X-Kommunikation Informationen über Intentionen des Verkehrsteilnehmers, beispielsweise einen Abbiegewunsch oder dergleichen, ermitteln und diese Informationen bei der Prädiktion der potentiellen Kollision mitberücksichtigen.

Die Zielgeschwindigkeit wird mittels der Recheneinheit insbesondere derart berechnet, dass, vorausgesetzt das Kraftfahrzeug wird entsprechend auf die Zielgeschwindigkeit abgebremst, die Kollision mit ausreichend hoher Wahrscheinlichkeit verhindert werden kann. Die Zielgeschwindigkeit ist dabei insbesondere kleiner als eine aktuelle Geschwindigkeit des Kraftfahrzeugs und im Allgemeinen ungleich Null. Die Richtung des Geschwindigkeitsvektors des Kraftfahrzeugs wird im Rahmen des verbesserten Konzepts nicht notwendigerweise verändert.

Um die Geschwindigkeit des Kraftfahrzeugs automatisch auf die Zielgeschwindigkeit zu reduzieren kann beispielsweise wenigstens eine Steuereinheit des Kraftfahrzeugs ein Bremssystem und/oder einen Antriebsmotor des Kraftfahrzeugs ansteuern. Die wenigstens eine Steuereinheit kann dabei beispielsweise Teil der Recheneinheit sein oder umgekehrt oder die Recheneinheit kann entsprechende Anweisungen an die wenigstens eine Steuereinheit ausgeben.

Durch die Berechnung der Zielgeschwindigkeit, um die prädizierte Kollision zu vermeiden, wird außerdem vermieden, dass das Kraftfahrzeug unnötig stark, beispielsweise bis zum Stillstand, abgebremst werden muss, insbesondere im Rahmen einer Notbremsung. Dazu kann die Umgebung des Kraftfahrzeugs mittels des Umfeldsensorsystems entsprechend vorausschauend zu frühen Zeitpunkten überwacht werden und als Ziel der Eingriffsstrategie kann die möglichst geringe Geschwindigkeitsreduktion des Kraftfahrzeugs einem höheren Stellenwert beigemessen werden.

Dabei ist es besonders vorteilhaft, dass sich der Verkehrsteilnehmer im Wesentlichen quer zur Bewegungsrichtung des Kraftfahrzeugs bewegt, da in diesem Fall die Wahrscheinlichkeit, dass durch eine gegebenenfalls nur geringfügige Anpassung der Geschwindigkeit des Kraftfahrzeugs erreicht wird, dass sich die Trajektorien des Verkehrsteilnehmers und des Kraftfahrzeugs nicht nahekommen.

Mit Vorteil handelt es sich bei dem Verkehrsteilnehmer um ein weiteres Kraftfahrzeug. In solchen Ausführungsformen ist aufgrund der typischerweise höheren Geschwindigkeit eines Kraftfahrzeug, im Vergleich beispielsweise zu einem Fußgänger, eine geringfügige Anpassung der Geschwindigkeit des Kraftfahrzeugs effektiver sein.

Gemäß zumindest einer Ausführungsform des Verfahrens nach dem verbesserten Konzept ist ein Betrag der Zielgeschwindigkeit größer als Null, wenn sich dadurch die prädizierte Kollision vermeiden lässt.

Mit anderen Worten wird eine Vollbremsung oder ein Abbremsen des Kraftfahrzeugs zum Stillstand nur durchgeführt, wenn sich durch eine anderweitige Reduktion der Zielgeschwindigkeit die Kollision nicht vermeiden lässt, wenn also ein vorgegebener Mindestabstand zwischen dem Verkehrsteilnehmer und dem Kraftfahrzeug sonst unterschritten würde. Dadurch wird dem Ziel, die Stärke des Eingriffs möglichst gering zu halten eine höhere Priorität beigemessen, sodass der Benutzerkomfort für Passagiere des Kraftfahrzeugs erhöht wird.

Gemäß zumindest einer Ausführungsform wird die Zielgeschwindigkeit mittels der Recheneinheit derart berechnet, dass eine Differenz zwischen einer aktuellen Geschwindigkeit des Kraftfahrzeugs und der Zielgeschwindigkeit unter der Bedingung minimiert wird, dass sich die prädizierte Kollision vermeiden lässt.

Dadurch kann die Verzögerung des Kraftfahrzeugs möglichst gering eingestellt werden und der Eingriff so möglichst komfortabel gestaltet werden. Die möglichst geringe Differenz zwischen aktueller Geschwindigkeit und Zielgeschwindigkeit lässt sich insbesondere dadurch erreichen, dass der Startzeitpunkt des Eingriffs, also der Geschwindigkeitsreduzierung, möglichst früh gelegt wird, nachdem die potentielle Kollision prädiziert wurde.

Erfindungsgemäß wird die Zielgeschwindigkeit mittels der Recheneinheit derart berechnet, dass ein prädizierter minimaler Abstand des Verkehrsteilnehmers zu dem Kraftfahrzeug größer oder gleich dem vorgegebenen Mindestabstand ist.

Insbesondere kann die Recheneinheit basierend auf den Sensordaten jeweilige Trajektorien des Verkehrsteilnehmers und des Kraftfahrzeugs prädizieren und basierend darauf den minimalen Abstand bestimmen. Der vorgegebene Mindestabstand kann dabei einem Abstand entsprechend, bei dem mit ausreichender Wahrscheinlichkeit von einem Ausschluss einer Kollision oder einer beinahe Kollision ausgegangen werden kann. Dazu kann die Recheneinheit beispielsweise den minimalen Abstand als Funktion eines Werts für die Zielgeschwindigkeit berechnen und die Zielgeschwindigkeit dementsprechend festlegen. Das Risiko, dass es zu einer Kollision oder zu einer Beinahekollision kommt kann in solchen Ausführungsformen reduziert werden.

Insbesondere ist der Betrag der Zielgeschwindigkeit nur dann gleich Null, wenn es nicht möglich ist, sicherzustellen, dass der prädizierte minimale Abstand größer oder gleich dem Mindestabstand ist, ohne die Zielgeschwindigkeit von Null vorzugeben.

Gemäß zumindest einer Ausführungsform wird die Zielgeschwindigkeit mittels der Recheneinheit derart berechnet, dass eine Differenz zwischen dem prädizierten minimalen Abstand und dem vorgegebenen Mindestabstand minimiert wird.

Mit anderen Worten wird die Zielgeschwindigkeit so groß wie möglich gewählt, sodass noch der Mindestabstand eingehalten werden kann. Dadurch wird der Benutzerkomfort maximiert.

Gemäß zumindest einer Ausführungsform wird mittels einer Bremssteuereinheit des Kraftfahrzeugs ein Bremssystem des Kraftfahrzeugs automatisch angesteuert, um die Geschwindigkeit des Kraftfahrzeugs automatisch auf die Zielgeschwindigkeit zu reduzieren.

Insbesondere bremst das Bremssystem, angesteuert durch die Bremssteuereinheit, das Kraftfahrzeug aktiv, um die Geschwindigkeit zu reduzieren. Die Bremssteuereinheit kann dabei Teil der Recheneinheit sein oder umgekehrt. Die Bremssteuereinheit und die Recheneinheit können aber auch separat zueinander ausgebildet sein. In letzterem Fall stehen die Recheneinheit und die Bremssteuereinheit in einer Kommunikationsverbindung, sodass die Recheneinheit der Bremssteuereinheit die Zielgeschwindigkeit oder die die einzustellende Bremsverzögerung übermitteln kann.

Gemäß zumindest einer Ausführungsform wird mittels einer Motorsteuereinheit des Kraftfahrzeugs ein Antriebsmotor des Kraftfahrzeugs automatisch angesteuert um die Geschwindigkeit des Kraftfahrzeugs automatisch auf die Zielgeschwindigkeit zu reduzieren.

Insbesondere steuert die Motorsteuereinheit den Antriebsmotor an, sodass das Motordrehmoment des Antriebsmotors reduziert wird, um die Geschwindigkeit zu reduzieren. Die Motorsteuereinheit kann dabei Teil der Recheneinheit sein oder umgekehrt. Die Motorsteuereinheit und die Recheneinheit können aber auch separat zueinander ausgebildet sein. In letzterem Fall stehen die Recheneinheit und die Motorsteuereinheit in einer Kommunikationsverbindung, sodass die Recheneinheit der Motorsteuereinheit die Zielgeschwindigkeit übermitteln kann.

Insbesondere kann das aktive Bremsen des Kraftfahrzeugs mittels des Bremssystems auch mit einem reduzierten Motordrehmoment durch Ansteuerung des Antriebsmotors kombiniert werden.

Gemäß dem verbesserten Konzept wird auch ein Fahrzeugsteuerungssystem zur wenigstens teilweise automatischen Längssteuerung des Kraftfahrzeugs angegeben. Das Fahrzeugsteuerungssystem weist ein Umfeldsensorsystem auf, das dazu eingerichtet ist, Sensordaten zu erzeugen, welche eine Umgebung des Kraftfahrzeugs darstellen. Das Fahrzeugsteuerungssystem weist eine Recheneinheit auf, die dazu eingerichtet ist, basierend auf den Sensordaten einen Geschwindigkeitsvektor eines Verkehrsteilnehmers in der Umgebung zu bestimmen und basierend auf den Sensordaten eine potentielle Kollision des Verkehrsteilnehmers mit dem Kraftfahrzeug zu prädizieren. Die Recheneinheit ist dazu eingerichtet, basierend auf dem Geschwindigkeitsvektor festzustellen, dass sich der Verkehrsteilnehmer im Wesentlichen quer zu einer Bewegungsrichtung des Kraftfahrzeugs bewegt. Die Recheneinheit ist dazu eingerichtet, eine Zielgeschwindigkeit für das Kraftfahrzeug berechnen, um die prädizierte Kollision zu vermeiden. Außerdem weist das Fahrzeugsteuerungssystem wenigstens eine Steuereinheit auf, die dazu eingerichtet ist, ein Bremssystem des Kraftfahrzeugs und/oder einen Antriebsmotor des Kraftfahrzeugs anzusteuern, um eine Geschwindigkeit des Kraftfahrzeugs automatisch auf die Zielgeschwindigkeit zu reduzieren.

Die wenigstens eine Steuereinheit kann dementsprechend eine Bremssteuereinheit und/oder eine Motorsteuereinheit beinhalten und kann Teil der Recheneinheit sein oder die Recheneinheit kann Teil der wenigstens einen Steuereinheit sein oder die wenigstens eine Steuereinheit kann separat zur Recheneinheit ausgebildet sein.

Gemäß zumindest einer Ausführungsform des Fahrzeugsteuerungssystems beinhaltet das Umfeldsensorsystem eine Kamera und/oder ein Radarsystem und/oder ein Lidarsystem.

Weitere Ausführungsformen des Fahrzeugsteuerungssystems nach dem verbesserten Konzept folgen direkt aus den verschiedenen Ausgestaltungsformen des Verfahrens nach dem verbesserten Konzept und umgekehrt. Insbesondere ist ein Fahrzeugsteuerungssystem dazu eingerichtet, ein Verfahren nach dem verbesserten Konzept durchzuführen oder es führt ein solches Verfahren durch.

Gemäß dem verbesserten Konzept wird auch ein Kraftfahrzeug angegeben, das ein Fahrzeugsteuerungssystem nach dem verbesserten Konzept beinhaltet.

Im Folgenden werden Ausführungsbeispiele der Erfindung beschrieben. Hierzu zeigt:
Fig. eine schematische Darstellung eines Kraftfahrzeugs mit einer beispielhaften Ausführungsform eines Fahrzeugsteuerungssystems nach dem verbesserten Konzept.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In Fig. ist ein Kraftfahrzeug 1 gezeigt, das sich auf einer Fahrbahn geradeaus auf eine Kreuzung zubewegt. Das Kraftfahrzeug 1 weist eine beispielhafte Ausführungsform eines Fahrzeugsteuerungssystems 3 nach dem verbesserten Konzept auf. Zudem ist ein weiterer Verkehrsteilnehmer 2 gezeigt, beispielsweise ein weiteres Kraftfahrzeug, der sich auf einer weiteren Fahrbahn auf die Kreuzung 9 zubewegt.

Das Fahrzeugsteuerungssystem 3 weist ein Umfeldsensorsystem 10 auf, das beispielsweise eine Kamera, ein Radarsystem und oder ein Lidarsystem beinhalten kann. Außerdem weist das Fahrzeugsteuerungssystem 3 eine Recheneinheit 4 auf sowie eine Bremssteuereinheit 5 und/oder eine Motorsteuereinheit 6.

Ein momentaner Geschwindigkeitsvektor 7 des Kraftfahrzeugs 1 zeigt von dem Kraftahrzeug 1 in Richtung der Kreuzung 9 und ein momentaner Geschwindigkeitsvektor 8 des Verkehrsteilnehmers 2 zeigt ebenfalls von dem Verkehrsteilnehmer 2 in Richtung der Kreuzung 9. Die Geschwindigkeitsvektoren 7, 8 stehen also beispielsweise näherungsweise senkrecht aufeinander. Mit anderen Worten stellt der Verkehrsteilnehmer 2 für das Kraftfahrzeug 1 Querverkehr dar. Basierend auf Messdaten des Umfeldsensorsystems 10 kann dieses Sensordaten erzeugen und an die Recheneinheit 4 übermitteln. Die Recheneinheit 4 kann basierend auf den Sensordaten zum einen den Geschwindigkeitsvektor 8 des Verkehrsteilnehmers 2 bestimmen und zum anderen, beispielsweise basierend auf einer Relativposition des Kraftfahrzeugs 1 bezüglich des Verkehrsteilnehmers 2 und den Geschwindigkeitsvektoren 7, 8, eine potentielle Kollision des Verkehrsteilnehmers 2 mit dem Kraftfahrzeug 1 im Bereich der Kreuzung 9 prädizieren.

Die Recheneinheit 4 kann nun beispielsweise basierend auf dem Geschwindigkeitsvektor 8 feststellen, dass sich der Verkehrsteilnehmer 2 im Wesentlichen quer zur Bewegungsrichtung des Kraftfahrzeugs bewegt. Die Recheneinheit 4 kann eine Zielgeschwindigkeit für das Kraftfahrzeug 1 berechnen, sodass die prädizierte Kollision vermieden werden kann, wenn die Geschwindigkeit des Kraftfahrzeugs 1 auf die Zielgeschwindigkeit reduziert wird.

Die Recheneinheit 4 kann dann die Bremssteuereinheit 5 anweisen, ein Bremssystem (nicht dargestellt) des Kraftfahrzeugs 1 anzusteuern, um die Geschwindigkeit des Kraftfahrzeugs 1 auf die Zielgeschwindigkeit zu reduzieren und/oder die Motorsteuereinheit 6 anweisen, einen Antriebsmotor (nicht dargestellt) des Kraftfahrzeugs 1 anzusteuern, um ein Motordrehmoment des Antriebsmotors zu reduzieren, um die Geschwindigkeit des Kraftfahrzeugs 1 zu reduzieren.

Die Zielgeschwindigkeit ist dabei im Allgemeinen größer als Null. Durch die frühzeitige Reduktion der Geschwindigkeit des Kraftfahrzeugs 1 kann beispielsweise erreicht werden, dass der Verkehrsteilnehmer 2 den Bereich der Kreuzung 9 bereits wieder verlassen hat wenn sich das Kraftfahrzeug 1 im Bereich der Kreuzung 9 befindet. So kann die potentielle Kollision verhindert werden, ohne dass eine sehr starke Notbremsung des Kraftfahrzeugs 1, beispielsweise bis zum Stillstand des Kraftfahrzeugs 1, erforderlich ist.

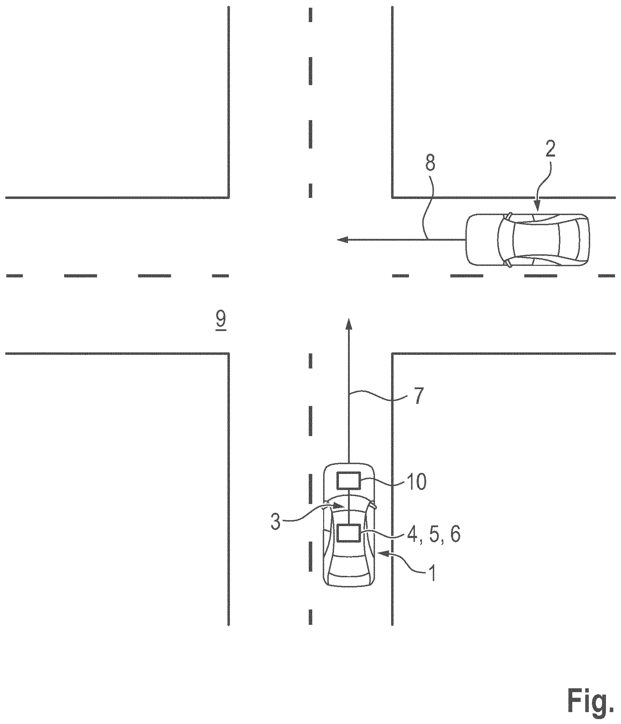

Gemäß dem verbesserten Konzept wird, wie insbesondere hinsichtlich der Figur beschrieben, eine Eingriffsstrategie ermöglicht, bei der das Kraftfahrzeug insbesondere nur soweit abgebremst wird, dass es ausreichende Zeit später am potentiellen Kollisionsort, beispielsweise im Bereich der Kreuzung, ankommt als der weitere Verkehrsteilnehmer, um eine Kollision entsprechend zu verhindern. Der Eingriff kann dabei derart ausgestaltet sein, dass er hinreichend früh aktiviert wird, sodass lediglich eine leichte Geschwindigkeitsreduktion ausreichend ist, um die Kollisionsgefahr zu beseitigen.

Die Eingriffsstrategie erreicht dabei beispielsweise ein Optimum aus einerseits einem möglichst frühen automatischen Eingriff, um zu erreichen das sich Zielgeschwindigkeit und Ausgangsgeschwindigkeit möglichst wenig unterscheiden. Andererseits erfolgt der Eingriff mit Vorteil so spät, dass ein, insbesondere aus Sicht des Fahrers, unnötiger Eingriff vermieden wird, beispielsweise wenn die Situation aufgrund des Verhaltens des Verkehrsteilnehmers deeskaliert wird.

Durch das verbesserte Konzept kann also die Kollisionsgefahr vermindert werden, wobei die Intensität der Geschwindigkeitsreduktion beziehungsweise das Ausmaß der Geschwindigkeitsreduktion geringer ist, als bei bekannten Verfahren. Der Eingriff kann dabei beispielsweise durch eine aktive Bremsung durch die Radbremsen oder auch durch eine Verminderung des Motordrehmoments erfolgen beziehungsweise durch eine Kombination.

### Bezugszeichenliste

- 1: Kraftfahrzeug
- 2: Verkehrsteilnehmer
- 3: Fahrzeugsteuerungssystem
- 4: Recheneinheit
- 5: Bremssteuereinheit
- 6: Motorsteuereinheit
- 7,8: Geschwindigkeitsvektoren
- 9: Kreuzung
- 10: Umfeldsensorsystem

## Patentansprüche

1. Verfahren zur wenigstens teilweise automatischen Längssteuerung eines Kraftfahrzeugs (1), wobei
- mittels eines Umfeldsensorsystems (10) des Kraftfahrzeugs (1) Sensordaten erzeugt werden, welche eine Umgebung des Kraftfahrzeugs (1) darstellen; und
- mittels einer Recheneinheit (4) des Kraftfahrzeugs (1) basierend auf den Sensordaten ein Geschwindigkeitsvektor (8) eines Verkehrsteilnehmers (2) in der Umgebung bestimmt wird und eine potentielle Kollision des Verkehrsteilnehmers (2) mit dem Kraftfahrzeug (1) prädiziert wird;
- mittels der Recheneinheit (4) basierend auf dem Geschwindigkeitsvektor (8) festgestellt wird, dass sich der Verkehrsteilnehmer (2) im Wesentlichen quer zu einer Bewegungsrichtung (7) des Kraftfahrzeugs (1) bewegt;
- mittels der Recheneinheit (4) eine Zielgeschwindigkeit für das Kraftfahrzeug (1) berechnet wird, um die prädizierte Kollision zu vermeiden, wobei die Zielgeschwindigkeit mittels der Recheneinheit (4) derart berechnet wird, dass ein prädizierter minimaler Abstand des Verkehrsteilnehmers (2) zu dem Kraftfahrzeug (1) größer oder gleich einem vorgegebenen Mindestabstand ist; und
- eine Geschwindigkeit des Kraftfahrzeugs (1) automatisch auf die Zielgeschwindigkeit reduziert wird.

2. Verfahren nach Anspruch 1,
**dadurch gekennzeichnet, dass**
mittels der Recheneinheit (4) festgestellt wird, dass eine Komponente des Geschwindigkeitsvektors (8) parallel zu der Bewegungsrichtung (7) kleiner ist, als eine Komponente des Geschwindigkeitsvektors (8) senkrecht zu der Bewegungsrichtung (7), um festzustellen, dass sich der Verkehrsteilnehmer (2) im Wesentlichen quer zu einer Bewegungsrichtung (7) des Kraftfahrzeugs (1) bewegt.

3. Verfahren nach einem der vorhergehenden Ansprüche,
**dadurch gekennzeichnet, dass**
- ein Betrag der Zielgeschwindigkeit größer als Null ist, wenn sich dadurch die prädizierte Kollision vermeiden lässt; und/oder
- die Zielgeschwindigkeit derart mittels der Recheneinheit (4) berechnet wird, dass eine Differenz zwischen einer aktuellen Geschwindigkeit des Kraftfahrzeugs (1) und der Zielgeschwindigkeit unter der Bedingung minimiert wird, dass sich die prädizierte Kollision vermeiden lässt.

4. Verfahren nach einem der vorhergehenden Ansprüche,
**dadurch gekennzeichnet, dass**
die Zielgeschwindigkeit mittels der Recheneinheit (4) derart berechnet wird, dass eine Differenz zwischen dem prädizierten minimalen Abstand und dem vorgegebenen Mindestabstand minimiert wird.

5. Verfahren nach einem der vorhergehenden Ansprüche,
**dadurch gekennzeichnet, dass**
mittels einer Bremssteuereinheit (5) des Kraftfahrzeugs (1) ein Bremssystem des Kraftfahrzeugs (1) automatisch angesteuert wird, um die Geschwindigkeit des Kraftfahrzeugs (1) automatisch auf die Zielgeschwindigkeit zu reduzieren.

6. Verfahren nach einem der vorhergehenden Ansprüche,
**dadurch gekennzeichnet, dass**
mittels einer Motorsteuereinheit (6) des Kraftfahrzeugs (1) ein Antriebsmotor des Kraftfahrzeugs (1) automatisch angesteuert wird, um die Geschwindigkeit des Kraftfahrzeugs (1) automatisch auf die Zielgeschwindigkeit zu reduzieren.

7. Fahrzeugsteuerungssystem (3) zur wenigstens teilweise automatischen Längssteuerung eines Kraftfahrzeugs (1), das Fahrzeugsteuerungssystem (3) aufweisend
- ein Umfeldsensorsystem (10), das dazu eingerichtet ist, Sensordaten zu erzeugen, welche eine Umgebung des Kraftfahrzeugs (1) darstellen; und
- eine Recheneinheit (4), die dazu eingerichtet ist, basierend auf den Sensordaten einen Geschwindigkeitsvektor (8) eines Verkehrsteilnehmers (2) in der Umgebung zu bestimmen und eine potentielle Kollision des Verkehrsteilnehmers (2) mit dem Kraftfahrzeug (1) zu prädizieren;
wobei
- die Recheneinheit (4) dazu eingerichtet ist, basierend auf dem Geschwindigkeitsvektor (8) festzustellen, dass sich der Verkehrsteilnehmer (2) im Wesentlichen quer zu einer Bewegungsrichtung (7) des Kraftfahrzeugs (1) bewegt;
- die Recheneinheit (4) dazu eingerichtet ist, eine Zielgeschwindigkeit für das Kraftfahrzeug (1) zu berechnen, um die prädizierte Kollision zu vermeiden, wobei die Recheneinheit (4) dazu eingerichtet ist, die Zielgeschwindigkeit derart zu berechnen, dass ein prädizierter minimaler Abstand des Verkehrsteilnehmers (2) zu dem Kraftfahrzeug (1) größer oder gleich einem vorgegebenen Mindestabstand ist; und
- das Fahrzeugsteuerungssystem (3) wenigstens eine Steuereinheit (5, 6), die dazu eingerichtet ist, ein Bremssystem des Kraftfahrzeugs (1) und/oder einen Antriebsmotor des Kraftfahrzeugs (1) anzusteuern, um eine Geschwindigkeit des Kraftfahrzeugs (1) automatisch auf die Zielgeschwindigkeit zu reduzieren.

8. Fahrzeugsteuerungssystem (3) nach Anspruch 7,
**dadurch gekennzeichnet, dass**
das Umfeldsensorsystem (10) eine Kamera und/oder ein Radarsystem und/oder ein Lidarsystem beinhaltet.

9. Kraftfahrzeug (1) mit einem Fahrzeugsteuerungssystem (3) nach einem der Ansprüche 7 oder 8.

## Claims

1. Method for the at least partially automatic longitudinal control of a motor vehicle (1), wherein
- by means of a surroundings sensor system (10) of the motor vehicle (1), sensor data are generated which represent an environment of the motor vehicle (1); and
- by means of a computing unit (4) of the motor vehicle (1), based on the sensor data, a speed vector (8) of a road user (2) in the environment is determined and a potential collision of the road user (2) with the motor vehicle (1) is predicted;
- by means of the computing unit (4), based on the speed vector (8), it is identified that the road user (2) is moving substantially transverse to a direction of movement (7) of the motor vehicle (1);
- by means of the computing unit (4), a target speed for the motor vehicle (1) is computed to avoid the predicted collision, wherein the target speed is computed by means of the computing unit (4) such that a predicted minimum distance between the road user (2) and the motor vehicle (1) is greater than or equal to a predefined minimum distance; and
- a speed of the motor vehicle (1) is automatically reduced to the target speed.

2. Method according to claim 1,
**characterized in that:**
to identify that the road user (2) is moving substantially transverse to a direction of movement (7) of the motor vehicle (1), the computing unit (4) identifies that a component of the speed vector (8) parallel to the direction of movement (7) is smaller than a component of the speed vector (8) perpendicular to the direction of movement (7).

3. Method according to any of the preceding claims,
**characterized in that:**
- an absolute value of the target speed is greater than zero if the predicted collision can thereby be avoided; and/or
- the target speed is computed by the computing unit (4) such that a difference between a current speed of the motor vehicle (1) and the target speed is minimized under the condition that the predicted collision can be avoided.

4. Method according to any of the preceding claims,
**characterized in that:**
the target speed is computed by the computing unit (4) such that a difference between the predicted minimum distance and the predefined minimum distance is minimized.

5. Method according to any of the preceding claims,
**characterized in that:**
a braking system of the motor vehicle (1) is automatically actuated by a brake control unit (5) of the motor vehicle (1) to reduce the speed of the motor vehicle (1) automatically to the target speed.

6. Method according to any of the preceding claims,
**characterized in that:**
a drive motor of the motor vehicle (1) is automatically actuated by an engine control unit (6) of the motor vehicle (1) to reduce the speed of the motor vehicle (1) automatically to the target speed.

7. Vehicle control system (3) for the at least partially automatic longitudinal control of a motor vehicle (1), the vehicle control system (3) comprising
- a surroundings sensor system (10) configured to generate sensor data that represent an environment of the motor vehicle (1); and
- a computing unit (4) configured, based on the sensor data, to determine a speed vector (8) of a road user (2) in the environment and to predict a potential collision of the road user (2) with the motor vehicle (1);
wherein
- the computing unit (4) is configured, based on the speed vector (8), to identify that the road user (2) is moving substantially transverse to a direction of movement (7) of the motor vehicle (1);
- the computing unit (4) is configured to compute a target speed for the motor vehicle (1) to avoid the predicted collision, wherein the computing unit (4) is configured to compute the target speed such that a predicted minimum distance between the road user (2) and the motor vehicle (1) is greater than or equal to a predefined minimum distance; and
- the vehicle control system (3) has at least one control unit (5, 6) that is configured to actuate a braking system of the motor vehicle (1) and/or a drive motor of the motor vehicle (1) to automatically reduce a speed of the motor vehicle (1) to the target speed.

8. Vehicle control system (3) according to claim 7,
**characterized in that:**
the surroundings sensor system (10) includes a camera and/or a radar system and/or a lidar system.

9. Motor vehicle (1) having a vehicle control system (3) according to any of claims 7 or 8.

## Revendications

1. Procédé pour la commande longitudinale au moins partiellement automatique d'un véhicule automobile (1), dans lequel
- des données de capteur sont générées au moyen d'un système de capteurs d'environnement (10) du véhicule automobile (1), lesquelles représentent un environnement du véhicule automobile (1) ; et
- un vecteur de vitesse (8) d'un usager de la route (2) dans l'environnement est déterminé au moyen d'une unité de calcul (4) du véhicule automobile (1) sur la base des données de capteur et une collision potentielle de l'usager de la route (2) avec le véhicule automobile (1) est prédite ;
- on détermine au moyen de l'unité de calcul (4), sur la base du vecteur de vitesse (8), que l'usager de la route (2) se déplace sensiblement transversalement à une direction de déplacement (7) du véhicule automobile (1) ;
- une vitesse cible pour le véhicule automobile (1) est calculée au moyen de l'unité de calcul (4) afin d'éviter la collision prédite, dans lequel la vitesse cible est calculée au moyen de l'unité de calcul (4) de telle sorte qu'une distance minimale prédite entre l'usager de la route (2) et le véhicule automobile (1) est supérieure ou égale à une distance minimale prédéfinie ; et
- une vitesse du véhicule automobile (1) est automatiquement réduite à la vitesse cible.

2. Procédé selon la revendication 1,
**caractérisé en ce que**
au moyen de l'unité de calcul (4), on constate qu'une composante du vecteur de vitesse (8) parallèlement à la direction de déplacement (7) est inférieure à une composante du vecteur de vitesse (8) perpendiculairement à la direction de déplacement (7) afin de constater que l'usager de la route (2) se déplace sensiblement transversalement à une direction de déplacement (7) du véhicule automobile (1).

3. Procédé selon l'une des revendications précédentes,
**caractérisé en ce que**
- une valeur de la vitesse cible est supérieure à zéro lorsque cela permet d'éviter la collision prédite ; et/ou
- la vitesse cible est calculée au moyen de l'unité de calcul (4) de telle sorte qu'une différence entre une vitesse actuelle du véhicule automobile (1) et la vitesse cible est minimisée à condition que la collision prédite puisse être évitée.

4. Procédé selon l'une des revendications précédentes,
**caractérisé en ce que**
la vitesse cible est calculée au moyen de l'unité de calcul (4) de telle sorte qu'une différence entre la distance minimale prédite et la distance minimale prédéfinie est minimisée.

5. Procédé selon l'une des revendications précédentes,
**caractérisé en ce que**
au moyen d'une unité de commande de freinage (5) du véhicule automobile (1), un système de freinage du véhicule automobile (1) est commandé automatiquement afin de réduire automatiquement la vitesse du véhicule automobile (1) à la vitesse cible.

6. Procédé selon l'une des revendications précédentes,
**caractérisé en ce que**
au moyen d'une unité de commande de moteur (6) du véhicule automobile (1), un moteur d'entraînement du véhicule automobile (1) est commandé automatiquement afin de réduire automatiquement la vitesse du véhicule automobile (1) à la vitesse cible.

7. Système de commande de véhicule (3) pour la commande longitudinale au moins partiellement automatique d'un véhicule automobile (1), le système de commande de véhicule (3) présentant
- un système de capteurs d'environnement (10) qui est configuré pour générer des données de capteur représentant un environnement du véhicule automobile (1) ; et
- une unité de calcul (4) qui est configurée pour déterminer, sur la base des données de capteur, un vecteur de vitesse (8) d'un usager de la route (2) dans l'environnement et pour prédire une collision potentielle de l'usager de la route (2) avec le véhicule automobile (1) ;
dans lequel
- l'unité de calcul (4) est configurée pour constater, sur la base du vecteur de vitesse (8), que l'usager de la route (2) se déplace sensiblement transversalement à une direction de déplacement (7) du véhicule automobile (1) ;
- l'unité de calcul (4) est configurée pour calculer une vitesse cible pour le véhicule automobile (1) afin d'éviter la collision prédite, dans lequel l'unité de calcul (4) est configurée pour calculer la vitesse cible de telle sorte qu'une distance minimale prédite entre l'usager de la route (2) et le véhicule automobile (1) est supérieure ou égale à une distance minimale prédéfinie ; et
- le système de commande de véhicule (3) au moins une unité de commande (5, 6) qui est configurée pour commander un système de freinage du véhicule automobile (1) et/ou un moteur d'entraînement du véhicule automobile (1) afin de réduire automatiquement une vitesse du véhicule automobile (1) à la vitesse cible.

8. Système de commande de véhicule (3) selon la revendication 7,
**caractérisé en ce que**
le système de capteurs d'environnement (10) comprend une caméra et/ou un système radar et/ou un système LiDAR.

9. Véhicule automobile (1) comportant un système de commande de véhicule (3) selon l'une des revendications 7 ou 8.
